# EUROPEAN PATENT SPECIFICATION

(11) **EP 3 422 598 B1**
(45) Date of publication and mention of the grant of the patent: **05.01.2022**
(21) Application number: 17178614.8
(22) Date of filing: 29.06.2017
(51) Int. Cl.: H04B 7/185, G05D 1/00

(54) **UNMANNED AERIAL VEHICLE SWITCHABLE TO A STEERING SIGNAL OF A SUPERIOR CLIENT**
AUF EIN STEUERSIGNAL EINES SUPERIOR CLIENT SCHALTBARES UNBEMANNTES LUFTFAHRZEUG
VÉHICULE AÉRIEN SANS ÉQUIPAGE COMMUTABLE À UN SIGNAL DE DIRECTION D'UN CLIENT SUPÉRIEUR

(43) Date of publication of application: 02.01.2019
(73) Proprietor: Deutsche Telekom AG, 53113 Bonn (DE)
(72) Inventor: SCHEPP, Ralph, 53343 Wachtberg (DE)
(74) Representative: Nern, Peter-Michael

(56) References cited:
- WO-A1-2017/013417
- US-A1- 2008 255 711
- US-A1- 2015 073 624

## Description

### TECHNICAL FIELD

The present disclosure relates to an unmanned vehicle, in particular an unmanned aerial vehicle (UAV) switchable to a steering signal of a superior client. The disclosure particularly relates to lawful interception and controlled takeover of unmanned vehicles for law enforcement. The disclosure further relates to a corresponding method for controlling an unmanned vehicle, in particular an UAV by a superior client radio device.

### BACKGROUND

Today there is basically no option for law enforcement agencies, in the following named as "police", to takeover in a controlled way the steering of unmanned vehicles.

Whenever there is a need to immediately protect e.g. private property, company properties or critical public infrastructure, buildings or areas (airports, stadiums) against not allowed missions of unmanned vehicles, today's options for police to enforce law are quite limited. Especially when it comes to unmanned aerial vehicles (UAVs) police has basically no legally compliant option to bring drones down to ground safely and without risking other traffic carriers.

Whereas for the detection of unwanted drones commercial products are available, the controlled grounding is complicated. Some airports use trained birds/ falcons to grab the drone in the air and ground it. To shoot a drone with a weapon is strictly forbidden as it endangers the regulated airspace and risks an uncontrolled crash. Today frequency jammers/guns are the most advanced solutions. They interrupt the steering frequency of the drone. Drones today have a random mode go fly back to their starting position in case their steering frequency is interrupted. However these frequency guns are regulatory-wise not allowed in many countries as they have the disadvantage uncontrolled reach and thus might impact a flying aircraft above.

US 2008/255711 A1 relates to a method for policing and managing the operation of a flying, unmanned aircraft in the event of usurpation of control of, malfunction of, or ill-intentioned use of this aircraft.

WO 2017/013417 A1 relates to an aircraft such as a drone with an authentication module and a communications module. The authentication module stores an identity uniquely associated with a specific pilot ("pilot ID") and sends that pilot ID to the communications module which sends that pilot ID to a secure integrated airspace management (SIAM) system that determines whether the pilot is permitted to fly that aircraft.

### SUMMARY

It is the object of the invention to provide a solution for taking over the steering of unmanned vehicles in a controlled way.

In particular it is the object of the invention to to provide a safe solution for taking over control of all kinds of wirelessly connected or steered (e.g. WiFi, GSM, LTE, 5G) unmanned vehicles, may they be unmanned aerial vehicles (drones) or driverless robots and cars on the ground.

This object is achieved by the features of the independent claims. Further implementation forms are apparent from the dependent claims, the description and the figures.

Drones or in general unmanned systems or UAVs as described in the following are widely controlled via a wireless mobile network. Are they flying/driving in visual line of sight they are typically connected and steered via WiFi, beyond visual line of sight they may use mobile networks of telecommunication providers.

In every case they include a steering unit (chipset) and a modem for communication purposes.

A basic idea of the invention is to implement a standardized (software based) back-door to the chipset and modem of the drone or UAV and a standardized smartphone app/ steering unit for the police.

In case a police pilot needs to take over the steering of the drone in order to ground the UAV safely, the pilot first starts his steering unit. The drone can be steered by WiFi or mobile networks, three different scenarios apply: A) The UAV is WiFi connected to its original pilot; B) The UAV is Telco mobile network connected to its pilot; and C) The UAV can be connected to its pilot by both options, either by Telco mobile network or by WiFi.

For the scenario A) where the UAV is WiFi connected to its original pilot, the police' steering unit must then be in line of sight to the drone. The law enforcement steering unit is able to detect the SSID of the flying drone. The law-enforcement back-door, e.g. a simple standardized Trojan in the drone's chipset, can detect a superior client for the modem. The modem, which is the WiFi router within the drone then switches the connection to the superior channel. Once the dominant police steering unit has taken over the WiFi connection it gives a signal to the router to switch the SSID to an incognito one, so that the original controller is disabled to take over again. Police is in full and only control and able to overtake steering and landing the drone safely. Instead of the software based back-door, also a higher transmission power for the police may be used in order to take over the drone control. In case the drone is registered in a central registry of the drone manufacturer or the regulator and its original controller is connected to the internet, a dedicated drone can be selected if more than one drone is within line of sight.

For the scenario B) where the UAV is Telco mobile network connected to its pilot, the following applies. As telco connected drones have by design the possibility for an identification via a SIM card/eSim/softSIM and precise geo-position informations it is not necessary for the police to be in line of sight with the unwanted unmanned vehicle. As these drones need to be controlled by a UAV traffic management system (UTM) and are connected via on-board units of telecommunication companies, the UTM and the telecommunication company need to prepare a dedicated real-time interface to the police. In this case the police steering unit is requesting the takeover via this interface to the UTM/Telecom system. The system checks the reliability of the request and switches the radio signal of the drone towards the police steering unit and locks the original pilot from access. The process itself is however similar to the WiFi variant. The eSim/mobile radio modem embedded on the drone's communication on-board unit, is equipped with a standardized back-door for lawful interception. This back-door can be centrally activated by the UTM system.

For the scenario C) where the UAV can be connected to its pilot by both options, either by Telco mobile network or by WiFi, an option exists to take-over the unmanned system in line of sight via WiFi (1.) even if the drone is registered and controlled in an UTM via cellular networks (2). In this case the UTM can compare the geo-position of the UAV with the position of the police steering unit. If the UAV's position is near enough to the overtaking steering unit, the system can simply switch out the connection to the radio network and thus making the WiFi connection to the police steering unit superior.

In this case it may be mandatory to have next to the mobile network modem a fall-back WiFi modem as well.

In order to describe the invention in detail, the following terms, abbreviations and notations will be used:
- UAV:: unmanned aerial vehicle or drone
- RPAS:: remotely piloted aircraft system or subject
- GNSS:: Global Navigation Satellite System
- GPS:: Global Positioning System
- 5G:: fifth generation mobile network
- LTE:: Long Term Evolution
- UTM:: UAV traffic management (system)
- ATC:: Air traffic control
- SIM:: Subscriber Identity Module
- eSIM:: electronic SIM, embedded SIM
- SSID:: service set identifier
- BS:: Base Station, eNodeB
- RF:: radio frequency

In the following description, the term UAV refers to a remotely piloted aircraft subject or system. In the following, unmanned aerial vehicles (UAVs) and drones are described. A UAV, commonly known as a drone, unmanned aircraft system (UAS), remotely piloted aircraft system (RPAS), remotely piloted aircraft subject or by several other names, is an aircraft without a human pilot aboard. A UAV is defined as a powered, aerial vehicle that does not carry a human operator, uses aerodynamic forces to provide vehicle lift, can fly autonomously or be piloted remotely, can be expendable or recoverable, and can carry a payload. The flight of UAVs may operate with various degrees of vehicular automation: either under remote control by a human operator, or fully or intermittently autonomously, by onboard computers.

UAVs as described in the following may be equipped with global navigation satellite system (GNSS) receivers (e.g. GPS, GLONASS, Galileo) to determine their location to high precision (within a few meters) using time signal transmitted along a line-of-sight propagation by radio from satellites to provide autonomous geo-spatial positioning. The GNSS receivers can be used for providing position, navigation or for tracking the position. Additionally the received signals allow the electronic receiver to calculate the current local time to high precision, which allows time synchronisation.

In the following, aspects and implementation forms of the invention are described. While the following aspects and implementation forms are exemplarily directed to unmanned aerial vehicles (UAVs), this shall not limit the subject matter of these aspects and implementation forms to unmanned aerial vehicles. As described above, all kinds of wirelessly connected or steered (e.g. WiFi, GSM, LTE, 5G) unmanned vehicles, may they be unmanned aerial vehicles (drones) or driverless robots and cars on the ground shall be included by aspects and implementation forms described hereinafter.

According to a first aspect, the invention relates to an unmanned aerial vehicle (UAV) controllable by a radio control device, the UAV comprising: a communication unit, configured to receive a steering signal via a first radio channel from a first client terminal for steering the UAV; a steering unit tuned to the first radio channel, the steering unit configured to steer the UAV based on the steering signal received via the first radio channel, wherein the communication unit is configured to receive a second steering signal via a second radio channel from a second client terminal for steering the UAV, wherein the second steering signal comprises information indicating a superior client; wherein the steering unit is configured: to detect the superior client based on the information from the second steering signal, and to switch the tuning of the steering unit from the first radio channel to the second radio channel based on the detection of the superior client in order to switch the steering of the UAV based on the steering signal of the superior client.

Such an UAV allows taking over the steering of the UAV in a controlled way by a superior client, e.g. by the police. In particular, the principle of detecting the superior client by the steering unit allows that control may be taken over for all kinds of wirelessly connected or steered (e.g. WiFi, GSM, LTE, 5G) unmanned vehicles such as drones or driverless robots or cars on the ground.

In an implementation form of the UAV, the communication unit comprises a wireless radio router, configured to establish a wireless radio connection, in particular a Wi-Fi connection, with the first client terminal based on a name, in particular a service set identifier (SSID), associated with a wireless radio network, in particular a Wi-Fi network, of the first client terminal when the steering unit is tuned to the first radio channel.

This provides the advantage that steering may be easily taken over for a WiFi controlled drone based on name, e.g. a service set identifier of the WiFi network. Hence, all WiFi controlled devices allow to implement this lawful interception.

In an implementation form of the UAV, the wireless radio router comprises a WiFi router, configured to establish a WiFi connection with the first client terminal based on a service set identifier (SSID) associated with a Wi-Fi network of the first client terminal when the steering unit is tuned to the first radio channel.

This provides the advantage that the UAV may be easily controlled by a WiFi terminal and hence control may be easily taken over by another WiFi terminal, e.g. a police WiFi terminal.

In an implementation form of the UAV, the wireless radio router is configured to switch the name associated with the wireless radio network of the first client terminal to another name upon detection of the superior client in order to cut off the wireless radio connection with the first client terminal.

This provides the advantage that the connection to the original pilot can be easily cut-off, simply by a change of the wireless radio network's name initiated by the superior terminal, e.g. the police.

In an implementation form of the UAV, the wireless radio router is configured to receive a cut-off signal from the second client terminal and to switch the name based on the cut-off signal.

This provides the advantage that taking over control by the superior terminal can be easily implemented by transmitting a cut-off signal to the UAV.

In an implementation form of the UAV, the wireless radio router is configured to establish a wireless radio connection with the second client terminal based on a name associated with a wireless radio network of the second client terminal when the steering unit is tuned to the second radio channel.

This provides the advantage that a new wireless radio connection with the superior client for taking over control can be efficiently established.

In an implementation form of the UAV, the information comprised by the second steering signal to indicate a superior client is one of the following: a data field indicating the superior client, a higher transmission power of the second steering signal compared to the first steering signal, a different modulation of the the second steering signal compared to the first steering signal.

This provides the advantage that there are multiple solutions for indicating the superior client. Of course, also a combination of these solutions can be implemented. The UAV is able to efficiently detect the superior client based on these solutions.

Pursuant to the invention the UAV comprises: a subscriber identity module (SIM), in particular an electronic SIM, and the communication unit comprises a mobile radio modem configured to establish a communication with a UAV traffic management (UTM) system based on the SIM module. This SIM is configured to be reconfigured to a new ID via interfaces upon a request of the superior client via the UTM system to take over control of the UAV.

This provides the advantage that the UAV can also be controlled beyond line-of-sight by a mobile network connecting with the SIM module.

In an implementation form of the UAV, the steering unit is configured to steer the UAV based on the communication with the UTM system.

This provides the advantage that the UAV can be precisely steered via the mobile network, in particular beyond line-of-sight.

In an implementation form of the UAV, the steering unit is configured to steer the UAV based on the steering signal of the first client terminal received via the UTM system when the steering unit is tuned to the first radio channel; and the steering unit is configured to steer the UAV based on the steering signal of the second client terminal received via the UTM system when the steering unit is tuned to the second radio channel.

This provides the advantage that the UAV can be flexibly controlled and hence control can be flexibly taken over by the superior pilot, e.g. the police.

In an implementation form of the UAV, the mobile radio modem is configured to reconfigure the eSIM towards communication with the second client terminal upon detection of the superior client.

This provides the advantage that the eSIM allows to flexibly reconfigure the UAV for taking over control by the superior client, e.g. the police.

In an implementation form of the UAV, an activation of the steering unit for detecting the superior client and/or switching the tuning of the steering unit from the first radio channel to the second radio channel is controlled by the UTM system.

This provides the advantage that the UTM system can be requested for all kinds of information about flight status of the UAVs. If one UAV cannot be controlled, control may have been taken over by the police. The pilot can check this by asking the UTM system.

In an implementation form of the UAV, the steering unit is configured to steer the UAV based on a Wi-Fi connection with the second client terminal when the UTM system detects a threshold distance between a position of the UAV and a position of the second client terminal.

This provides the advantage that the superior client, e.g. the police, can steer the UAV by a WiFi connection when the UAV is within line of sight, i.e. below the threshold distance.

Such a threshold distance can be for example 50m, 100m, 200m, 300m, 400m or 500m or any other suitable distance.

In an implementation form of the UAV, the steering unit comprises a Trojan application configured to perform the detection of the superior client and/or the switching of the tuning of the steering unit from the first radio channel to the second radio channel.

This provides the advantage that the Trojan application can be hidden within the UAV from the pilot of the UAV and can be activated by the superior client, e.g. the police, if necessary. Alternatively the Trojan application can be continuously active on the UAV but not known to the pilot.

According to a second aspect the invention relates to a method for controlling an unmanned aerial vehicle (UAV) by a radio control device, the method comprising: receiving, by a communication unit of the UAV, a steering signal via a first radio channel from a first client terminal for steering the UAV; steering the UAV, by a steering unit of the UAV tuned to the first radio channel, based on the steering signal received via the first radio channel; receiving, by the communication unit, a second steering signal via a second radio channel from a second client terminal for steering the UAV, wherein the second steering signal comprises information indicating a superior client; detecting the superior client based on the information from the second steering signal, and switching the tuning of the steering unit from the first radio channel to the second radio channel based on the detection of the superior client in order to switch the steering of the UAV based on the steering signal of the superior client.

Such a method for controlling an UAV allows taking over the steering of the UAV in a controlled way by a superior client, e.g. by the police. In particular, the principle of detecting the superior client by the steering unit allows that control may be taken over for all kinds of wirelessly connected or steered (e.g. WiFi, GSM, LTE, 5G) unmanned vehicles such as drones or driverless robots or cars on the ground.

### BRIEF DESCRIPTION OF THE DRAWINGS

Further embodiments of the invention will be described with respect to the following figures, in which:
Fig. 1 shows a schematic diagram illustrating a drone control and steering system 100.
Figs. 2a, 2b and 2c show schematic diagrams illustrating the basic principle for interception and takeover for a WiFi controlled system, where

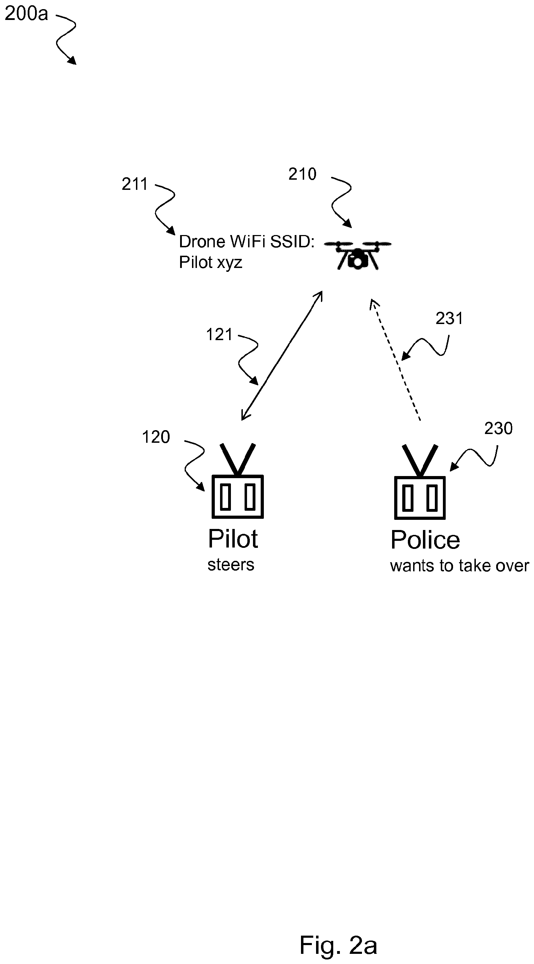

Fig. 2a illustrates the scenario 200a of taking over control by a police client,

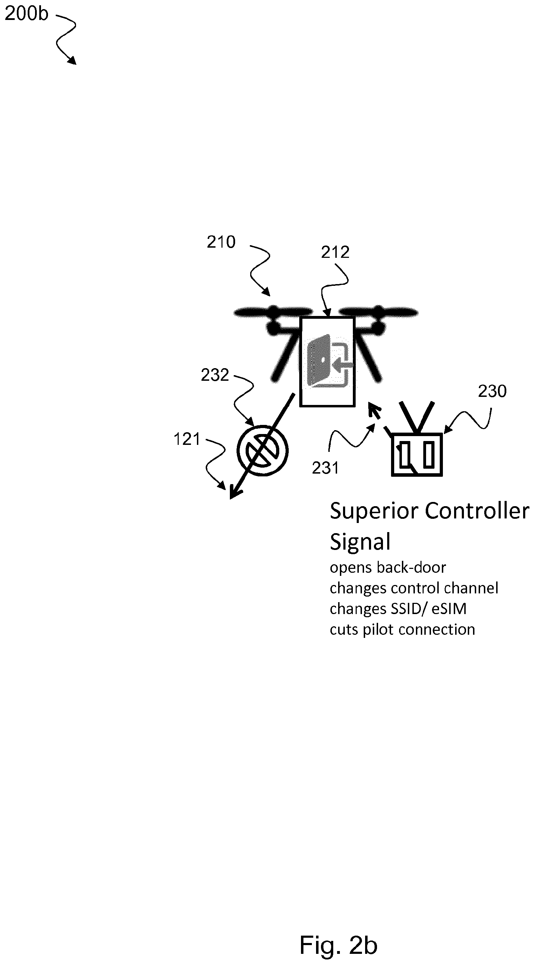

Fig. 2b illustrates the scenario 200b of opening a back door in the UAV for changing control channel to the police client and

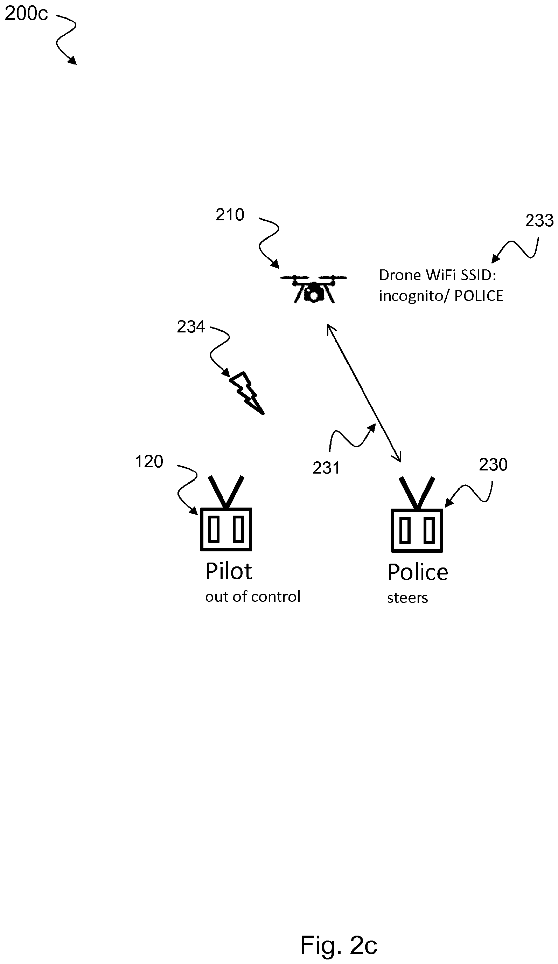

Fig. 2c illustrates the scenario 200c of cutting connection to the original pilot.

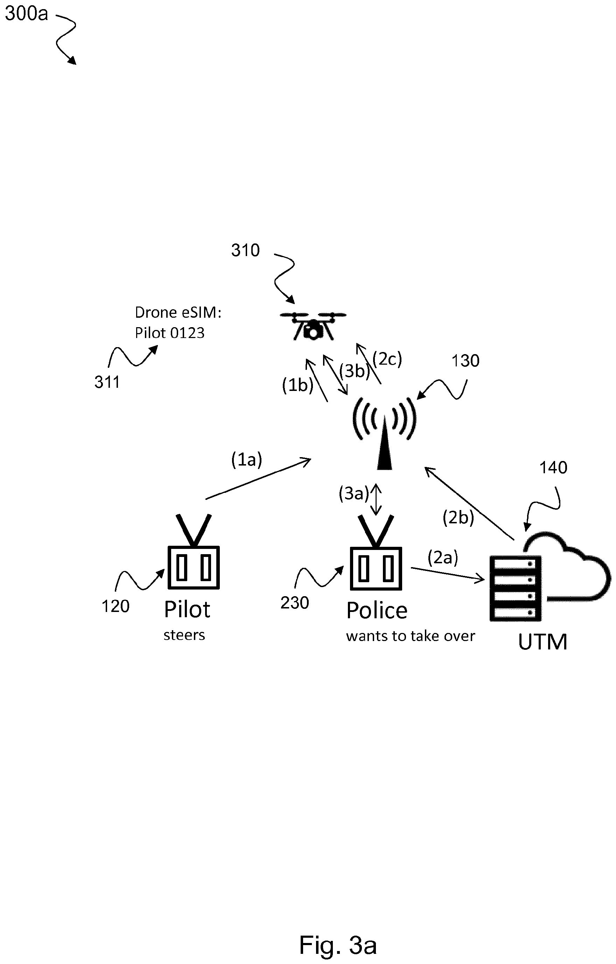

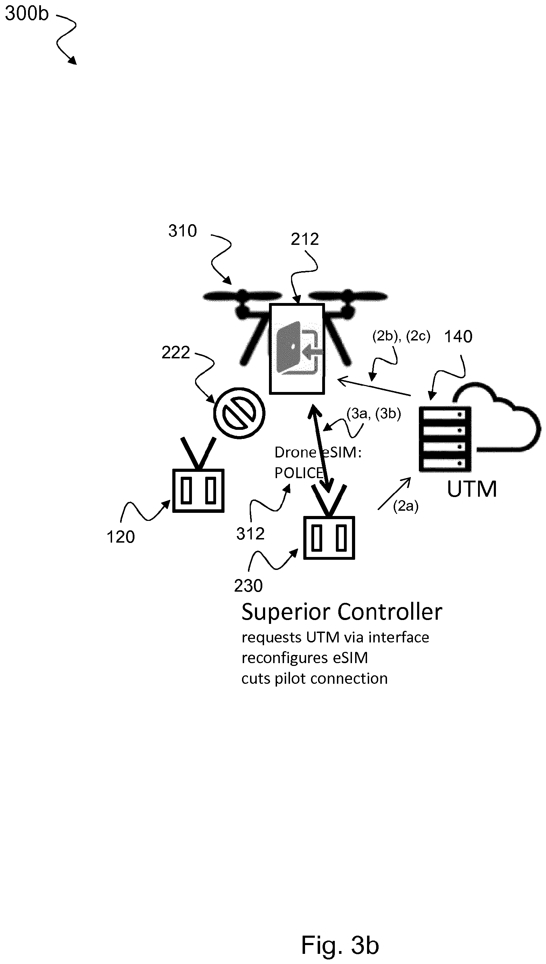

Figs. 3a and 3b show schematic diagrams illustrating the basic principle for interception and takeover in a mobile network controlled system, where
Fig. 3a illustrates the scenario 300a of taking over control by a police client and
Fig. 3b illustrates the scenario 300b of opening a back door in the UAV for changing control channel to the police client and reconfiguring the drone's eSIM towards the police controller.

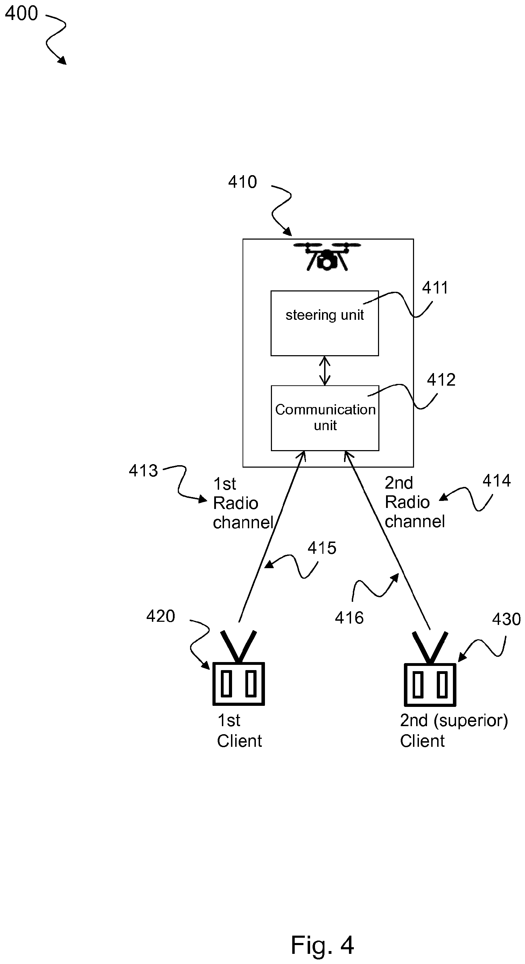

Fig. 4 shows a block diagram illustrating an UAV 400 switchable to a steering signal of a superior client according to the disclosure.

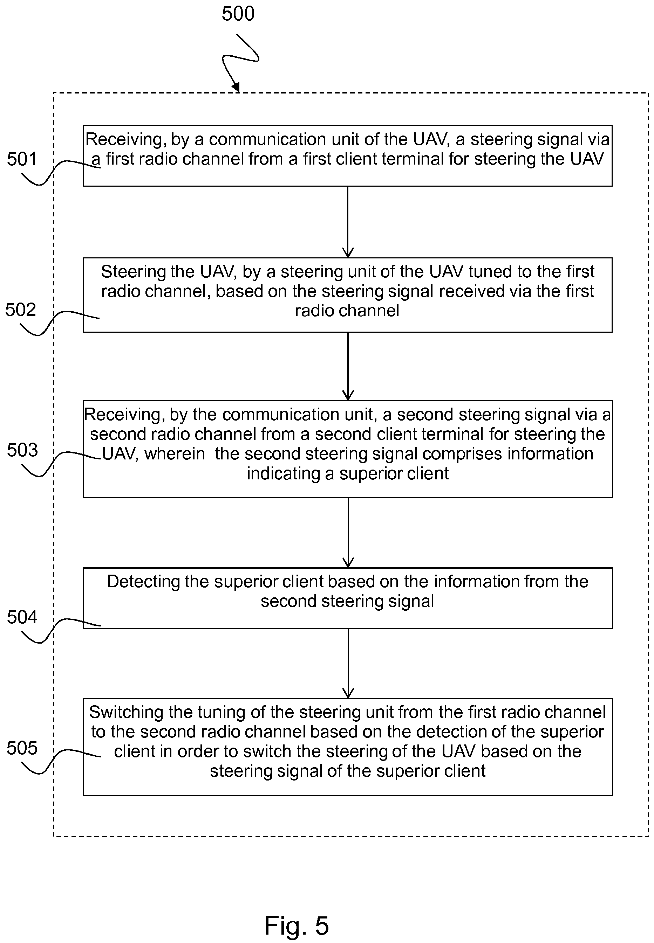

Fig. 5 shows a schematic diagram illustrating a method 500 for controlling an UAV by a radio control device according to the disclosure.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

UAVs and drones as described in the following may apply various communication techniques, in particular utilizing radio control based on mobile communication standards such as LTE, in particular LTE-A and/or OFDM and successor standards such as 5G or based on IEEE 802.11 networks such as WiFi or based on other communication standards such as Bluetooth or Zigbee. The components and network nodes of such systems may be implemented as electronic devices or electronic network entities. The described devices and systems may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

UAVs and drones as described in the following may apply Trojan applications or Trojans to enable take over control by the police. A Trojan application or simply referred to as a Trojan, is a malicious computer program which is used to hack into a computer by misleading users of its true intent. Trojans may allow an attacker to access users' personal information such as WiFi connection names and passwords, or personal identity (IP address). The Trojan can be used as spyware on the drone to collect information on the client and to cut the connection to the client. Spyware used or made by the government (or police) is sometimes called *govware.* Govware is typically a Trojan horse software used to intercept communications from the target computer, i.e. the computing unit of the drone.

Air traffic control (ATC) as described in the following is a service provided by ground-based controllers who direct aircraft on the ground and through controlled airspace, and can provide advisory services to aircraft in non-controlled airspace. The primary purpose of ATC worldwide is to prevent collisions, organize and expedite the flow of air traffic, and provide information and other support for pilots. In some countries, ATC plays a security or defensive role, or is operated by the military. To prevent collisions, ATC enforces traffic separation rules, which ensure each aircraft maintains a minimum amount of empty space around it at all times. Many aircraft also have collision avoidance systems, which provide additional safety by warning pilots when other aircraft get too close.

UAV traffic management (UTM) as described in the following, is a cloud-based system that helps manage traffic at low altitudes and avoid collisions of UAVs being operated beyond visual line of sight.

UAVs and drones as described in the following may be equipped with SIM cards, embedded SIMs, electronic SIMs or Software SIMs. A subscriber identity module or subscriber identification module (SIM) is an integrated circuit that is intended to securely store the international mobile subscriber identity (IMSI) number and its related key, which are used to identify and authenticate subscribers on mobile telephony devices (such as mobile phones and computers). Upcoming new generation of SIM is called e-SIM or eSIM (embeddedSIM), which is non-replaceable embedded chip which may be soldered directly onto a circuit board.

A service set (SS) as described in the following is a set consisting of all the devices associated with a consumer or enterprise IEEE 802.11 wireless local area network (WLAN). The service set can be local, independent, extended or mesh. Service sets have an associated identifier, the service set identifier, which consists of 32 octets that frequently contains a human readable identifier of the network. The basic service set (BSS) provides the basic building-block of an 802.11 wireless LAN. In infrastructure mode, a single access point (AP) together with all associated stations (STAs) is called a BSS. The access point acts as a master to control the stations within that BSS; the simplest BSS consists of one access point and one station.

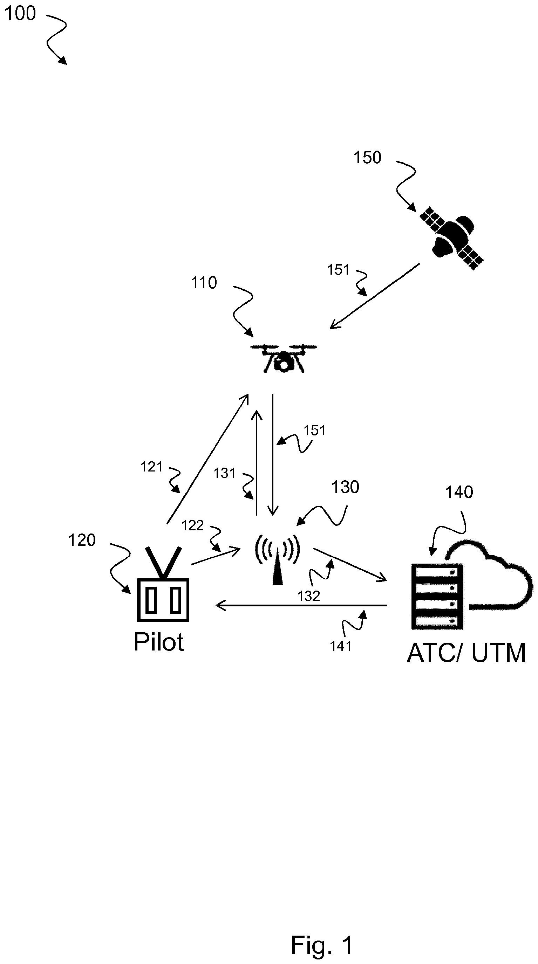

Fig. 1 shows a schematic diagram illustrating a drone control and steering system 100. The system 100 includes a drone or UAV 110, a pilot 120, a radio network represented by a base station 130 and an aerial traffic control (ATC) / UAV traffic management (UTM) system. The drone may be equipped with a global navigation satellite system (GNSS) receiver for receiving position data 151, e.g. satellite based GPS data, by one or more satellites 150 to determine a geographical location of the UAV 110. The drone sends that position data 151 via mobile network (base station 130) to the UAV traffic management (UTM) system 140 which informs the pilot 120. For these actions an UTM control channel 151, 132, 141 is used for transferring data between satellite 150, drone 110, mobile network 130, UTM 140 and pilot 120. The pilot 120 can control the drone via WiFi control channel 121 or alternatively via mobile network control channel 122, 131 based on the information received through the UTM control channel 151, 132, 141.

Figs. 2a, 2b and 2c show schematic diagrams illustrating the basic principle for interception and takeover for a WiFi controlled system.

Fig. 2a illustrates the scenario 200a of taking over control by a police client 230. In this scenario pilot 120 steers the UAV 210 based on WiFi control 121 and Police 230 wants to take over control 231 of the UAV 210. The drone's 210 WiFi SSID is for example "Pilot xyz" 211. The pilot 120 and the police client 230 may for example be implemented as application programs (apps) on a Smartphone, mobile device, tabletPC or other electronic device that is able to connect to the UAV via wireless radio such as WiFi, Bluetooth, Zigbee, etc.

Fig. 2b illustrates the scenario 200b of opening a back door 212 in the UAV 210 for changing control channel from pilot's WiFi control channel 121 to the police client's WiFi control channel 231. The superior controller's 230 (i.e. the Police 230) signal 231 opens this backdoor 212 in the UAV 210, changes control channel, changes SSID/eSIM and cuts 232 pilot connection.

Fig. 2c illustrates the scenario 200c of cutting connection to the original pilot. The superior controller's 230 (i.e. the Police 230) signal 231 takes over control of the UAV by changing the drone's 210 WiFi SSID from "Pilot xyz" 211 to "incognito" or "POLICE" 233, for example. The pilot don't know this new SSID of the drone 210 is is thus cut 234 from control. Now, police 230 steers the drone 210 via WiFi.

For these scenarios 200a, 200b, 200c the police' steering unit 230 should be in line of sight to the drone 210. The law enforcement steering unit 230 is able to detect the SSID of the flying drone 210. The law-enforcement back-door 212, e.g. a simple standardized Trojan in the drone's 210 chipset can detect a superior client 230 for the modem. The modem, which is the WiFi router within the drone 210 then switches the connection to the superior channel 230. Once the dominant police steering unit 230 has taken over the WiFi connection 231 it gives a signal to the router to switch the SSID 233 to an incognito one, so that the original controller is disabled to take over again 234. Police 230 is in full and only control and able to overtake steering and land the drone 210 safely.

Instead of the software based back-door 212, also a higher transmission power for the police 230 cand be used in order to take over the drone 210 control.

In case the drone 210 is registered in a central registry of the drone manufacturer or the regulator and its original controller is connected to the internet, a dedicated drone can be selected if more than one drone is within line of sight.

Figs. 3a and 3b show schematic diagrams illustrating the basic principle for interception and takeover in a mobile network controlled system pursuant to the invention. Fig. 3a illustrates the scenario 300a of taking over control by a police client 230. In this scenario 300a the drone/UAV is a mobile network connected drone 310 equipped with a SIM card or an electronic SIM with ID "Pilot 0123", for example. Initially, the pilot 120 steers the drone 310 by sending control commands (1a), (1b) via mobile network 130. The Police terminal 230 that wants to take over control of the drone 310 sends control commands (2a), (2b) (2c) via UTM system 140 and mobile network 130 to the drone 310 in order to activate the backdoor software in the drone 310 that initiates taking over control by the police terminal 230. When taking over control by the Police terminal 230 is established, the Police terminal 230 can directly steer (3a), (3b) the drone 310 via mobile network 130 without using the UTM system 140.

Fig. 3b illustrates the scenario 300b of opening a back door 212 in the UAV 310 for changing control channel to the police client 230 and reconfiguring the drone's eSIM 312 towards the police controller 230. The police client 230 which is the superior controller requests UTM 140 via interface (2a) to reconfigure drone's eSIM 312 to new ID "POLICE", for example. Via interfaces (2b), (2c) the drone's eSIM 312 is then reconfigured to new ID "POLICE" and the pilot connection is cut 222. Then, the drone 310 can be controlled by the police terminal 230, i.e. the superior controller, via interfaces (3a), (3b) as described with respect to Fig. 3a. Instead of the ID "POLICE" any other ID not known to the pilot 120 can be used.

For these scenarios 300a, 300b, as telco connected drones 310 have by design the possibility for an identification via a SIM card/eSim/softSIM 312 precise geo-position informations it is not necessary for the police 230 to be in line of sight with the unwanted unmanned vehicle 310. As these drones 310 need to be controlled by a UAV traffic management system (UTM) 140 and are connected via on-board units of telecommunication companies, the UTM 140 and the telecommunication company may use a dedicated real-time interface (2a) to the police. In this case the police steering unit 230 is requesting the takeover via this interface (2a) to the UTM/Telecomms system 140. The System 140 checks the reliability of the request and switches the radio signal of the drone 310 towards the police steering unit 230 and locks 222 the original pilot 120 from access.

The process itself is however similar to the WiFi variant described above with respect to Figures 2a, 2b, 2c. The eSim/mobile radio modem embedded on the drone's 310 communication on-board unit, is equipped with a standardized back-door 212 for lawful interception. This back-door 212 can be centrally activated by the UTM system 140.

The scenarios of the WiFi controlled system and the mobile network controlled system can also be combined. There is an option to take-over the unmanned system 210, 310 in line of sight via WiFi even if the drone is registered and controlled in an UTM 140 via cellular networks.

In this case the UTM 140 needs to compare the geo-position of the UAV 210, 310 with the position of the police steering unit 230. If the UAV's position is near enough to the overtaking steering unit 230, the system can simply switch out the connection to the radio network and thus making the WiFi connection to the police steering unit 230 superior.

In this case it may be mandatory to have next to mobile network modem a fall-back WiFi modem as well.

Fig. 4 shows a block diagram illustrating an UAV 400 switchable to a steering signal of a superior client according to the disclosure. The UAV 400 includes a communication unit 412 and a steering unit 411.

The communication unit 412 is configured to receive a steering signal via a first radio channel 413 from a first client terminal 420 for steering the UAV 410. The steering unit 411 is initially tuned to the first radio channel 413 and configured to steer the UAV 410 based on the steering signal received via the first radio channel 413.

The communication unit 412 is configured to receive a second steering signal via a second radio channel 414 from a second client terminal 430 for steering the UAV 410, wherein the second steering signal comprises information indicating a superior client 430 (which is here equal to the second client terminal).

The steering unit 411 is configured: to detect the superior client based on the information from the second steering signal, and to switch the tuning of the steering unit 411 from the first radio channel 413 to the second radio channel 414 based on the detection of the superior client 430 in order to switch the steering of the UAV 410 based on the steering signal of the superior client 430.

Detecting the superior client 430 and switching the tuning of the steering unit 411 from the first radio channel 413 connected with the first client terminal 420 to the second radio channel 414 connected with the second client terminal 430, i.e. the superior client or Police terminal may be performed as described for the scenarios 200a, 200b, 200c described above with respect to Figures 2a, 2b and 2c or as described for the scenarios 300a, 300b described above with respect to Figures 3a and 3b.

The first client terminal 420 and the second client termal (i.e. the superior client) 430 may for example be implemented as application programs (apps) on a Smartphone, mobile device, tabletPC or any other electronic device that is able to connect to the 410 UAV via wireless radio such as WiFi, Bluetooth, Zigbee, etc. and/or via a mobile network connection.

In an exemplary implementation form the communication unit 412 comprises a wireless radio router, configured to establish a wireless radio connection, in particular a Wi-Fi connection, with the first client terminal 420 based on a name, in particular a service set identifier (SSID), associated with a wireless radio network, in particular a Wi-Fi network, of the first client terminal 420 when the steering unit 411 is tuned to the first radio channel 413.

The wireless radio router may include a WiFi router, configured to establish a WiFi connection with the first client terminal 420 based on a service set identifier (SSID) associated with a Wi-Fi network of the first client terminal 420 when the steering unit 411 is tuned to the first radio channel 413.

The wireless radio router may be configured to switch the name associated with the wireless radio network of the first client terminal 420 to another name upon detection of the superior client 430 in order to cut off the wireless radio connection with the first client terminal 420.

The wireless radio router may be configured to receive a cut-off signal from the second client terminal 430 and to switch the name based on the cut-off signal.

The wireless radio router may be configured to establish a wireless radio connection with the second client terminal 430 based on a name associated with a wireless radio network of the second client terminal 430 when the steering unit 411 is tuned to the second radio channel 414.

The information comprised by the second steering signal to indicate a superior client 430 is one of the following: a data field indicating the superior client 430, a higher transmission power of the second steering signal compared to the first steering signal, a different modulation of the the second steering signal compared to the first steering signal.

In an exemplary implementation form the UAV includes a subscriber identity module (SIM) 311, for example an electronic SIM. The communication unit 412 includes a mobile radio modem configured to establish a communication with a UAV traffic management (UTM) system 140 based on the SIM module 311, e.g. as described above with respect to Figures 3a and 3b.

The steering unit 411 may be configured to steer the UAV 410 based on the communication with the UTM system 140, e.g. as described above with respect to Figures 3a and 3b.

The steering unit 411 may be configured to steer the UAV 410 based on the steering signal of the first client terminal 420 received via the UTM system 140 when the steering unit 411 is tuned to the first radio channel 413. The steering unit 411 may be configured to steer the UAV 410 based on the steering signal of the second client terminal 430 received via the UTM system 140 when the steering unit 411 is tuned to the second radio channel 414.

The mobile radio modem may reconfigure the eSIM 311, 312 towards communication with the second client terminal 430 upon detection of the superior client 430, e.g. as described above with respect to Figures 3a and 3b.

An activation of the steering unit 411 for detecting the superior client 430 and/or switching the tuning of the steering unit 411 from the first radio channel 413 to the second radio channel 414 may be controlled by the UTM system 140.

The steering unit 411 may be configured to steer the UAV 410 based on a Wi-Fi connection with the second client terminal 430 when the UTM system 140 detects a threshold distance between a position of the UAV 410 and a position of the second client terminal 430, e.g. as described above with respect to Figures 2a, 2b and 2c. The threshold distance may be set to a value indicating the line of sight, e.g. about 100 meters to 500 meters.

In an exemplary implementation form the steering unit 411 may include a Trojan application configured to perform the detection of the superior client 430 and/or the switching of the tuning of the steering unit 411 from the first radio channel 413 to the second radio channel 414.

The Trojan application or simply referred to as Trojan, may be a malicious computer program which is used to hack into the communication unit or steering unit of the UAV by misleading the user of the UAV, i.e. the first client, of its true intent. The Trojan may allow an attacker, e.g. the Police in this case, to access users' personal information such as WiFi connection names and passwords, or personal identity (IP address). The Trojan can be used as spyware on the drone to collect information on the first radio channel and to cut the connection to the first client terminal. The Trojan application may be implemented as Spyware used or made by the government (or police). Such Govware can be implemented as a Trojan horse software used to intercept communications from the target computer, e.g. the communication unit or the steering unit, running on the UAV.

Fig. 5 shows a schematic diagram illustrating a method 500 for controlling an UAV by a radio control device according to the disclosure.

The method 500 includes: receiving 501, by a communication unit of the UAV 410, e.g. a communication unit 412 as described above with respect to Fig. 4, a steering signal via a first radio channel 413 from a first client terminal 420 for steering the UAV 410, e.g. as described above with respect to Fig. 4.

The method 500 further includes: steering 502 the UAV 410, by a steering unit 411 of the UAV 410 tuned to the first radio channel 413, based on the steering signal received via the first radio channel 413, for example by a steering unit 411 as described above with respect to Fig. 4.

The method 500 further includes: receiving 503, by the communication unit, a second steering signal via a second radio channel 414 from a second client terminal 430 for steering the UAV 410, wherein the second steering signal comprises information indicating a superior client 430, e.g. as described above with respect to Figs. 2 to 4.

The method 500 further includes: detecting 504 the superior client 430 based on the information from the second steering signal, e.g. as described above with respect to Figs. 2 to 4.

The method 500 further includes: switching 505 the tuning of the steering unit 411 from the first radio channel 413 to the second radio channel 414 based on the detection of the superior client 430 in order to switch the steering of the UAV 410 based on the steering signal of the superior client 430, e.g. as described above with respect to Figs. 2 to 4.

The method 500 may be applied on an UAV as described above with respect to Figures 1 to 4.

The methods, systems and devices described herein may be implemented as electrical and/or optical circuit within a chip or an integrated circuit or an application specific integrated circuit (ASIC). The invention can be implemented in digital and/or analogue electronic and optical circuitry. The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The present disclosure also supports a computer program product including computer executable code or computer executable instructions that, when executed, causes at least one computer to execute the performing and computing steps described herein, in particular the method 500 as described above with respect to Fig. 5 and the techniques described above with respect to Figs. 1-4. Such a computer program product may include a readable non-transitory storage medium storing program code thereon for use by a computer. The program code may perform the methods and techniques as described above with respect to Figures 1 to 5. Such a computer program product may run on a UAV as described above with respect to Figures 1 to 4.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate implementations may be substituted for the specific aspects shown and described without departing from the scope of the present disclosure.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims the invention may be practiced otherwise than as specifically described herein.

## Claims

1. An unmanned aerial vehicle (UAV) (410, 310) controllable by a radio control device (420, 430), the UAV (410, 310) comprising:
a communication unit (412), configured to receive a steering signal via a first radio channel (413) from a first client terminal (420) for steering the UAV (410, 310);
a steering unit (411) tuned to the first radio channel (413), the steering unit (411) configured to steer the UAV (410, 310) based on the steering signal received via the first radio channel (413); and
a subscriber identity module (SIM) (311) with an ID for a mobile network (130),
wherein the communication unit (412) is configured to receive a second steering signal via a second radio channel (414) from a second client terminal (430) for steering the UAV (410, 310), wherein the second steering signal comprises information indicating a superior client (430);
wherein the steering unit (411) is configured:
to detect the superior client based on the information from the second steering signal, and
to switch the tuning of the steering unit (411) from the first radio channel (413) to the second radio channel (414) based on the detection of the superior client (430) in order to switch the steering of the UAV (410, 310) based on the steering signal of the superior client (430),
**characterised in**
**that** the communication unit (412) comprises a mobile radio modem configured to establish a communication with a UAV traffic management (UTM) system (140) based on the SIM module (311) and
**that** the SIM (311) is an electronic SIM (eSIM) and is configured to be reconfigured to a new ID via interfaces (2b, 2c) upon a request of the superior client via the UTM system (140) to take over control of the UAV (410, 310) and
**that** the steering unit (411) is configured to steer the UAV (410, 310) based on the communication with the UTM system (140).

2. The UAV (410, 310) of claim 1,
wherein the communication unit (412) comprises a wireless radio router, configured to establish a wireless radio connection, in particular a Wi-Fi connection, with the first client terminal (420) based on a name, in particular a service set identifier (SSID), associated with a wireless radio network, in particular a Wi-Fi network, of the first client terminal (420) when the steering unit (411) is tuned to the first radio channel (413).

3. The UAV (410, 310) of claim 2,
wherein the wireless radio router comprises a WiFi router, configured to establish a WiFi connection with the first client terminal (420) based on a service set identifier (SSID) associated with a Wi-Fi network of the first client terminal (420) when the steering unit (411) is tuned to the first radio channel (413).

4. The UAV (410, 310) of claim 2 or 3,
wherein the wireless radio router is configured to switch the name associated with the wireless radio network of the first client terminal (420) to another name upon detection of the superior client (430) in order to cut off the wireless radio connection with the first client terminal (420).

5. The UAV (410, 310) of claim 4,
wherein the wireless radio router is configured to receive a cut-off signal from the second client terminal (430) and to switch the name based on the cut-off signal.

6. The UAV (410, 310) of one of claims 2 to 5,
wherein the wireless radio router is configured to establish a wireless radio connection with the second client terminal (430) based on a name associated with a wireless radio network of the second client terminal (430) when the steering unit (411) is tuned to the second radio channel (414).

7. The UAV (410, 310) of one of the preceding claims,
wherein the information comprised by the second steering signal to indicate a superior client (430) is one of the following: a data field indicating the superior client (430), a higher transmission power of the second steering signal compared to the first steering signal, a different modulation of the the second steering signal compared to the first steering signal.

8. The UAV (410, 310) of claim 1,
wherein the steering unit (411) is configured to steer the UAV (410, 310) based on the steering signal of the first client terminal (420) received via the UTM system (140) when the steering unit (411) is tuned to the first radio channel (413); and
wherein the steering unit (411) is configured to steer the UAV (410, 310) based on the steering signal of the second client terminal (430) received via the UTM system (140) when the steering unit (411) is tuned to the second radio channel (414).

9. The UAV (410, 310) of claim 1 or 8,
wherein the mobile radio modem is configured to reconfigure the eSIM (311, 312) towards communication with the second client terminal (430) upon detection of the superior client (430).

10. The UAV (410, 310) of one of claim 1 or 8,
wherein an activation of the steering unit (411) for detecting the superior client (430) and/or switching the tuning of the steering unit (411) from the first radio channel (413) to the second radio channel (414) is controlled by the UTM system (140).

11. The UAV (410, 210, 310) of claim 1,
wherein the steering unit (411) is configured to steer the UAV (410, 210) based on a Wi-Fi connection with the second client terminal (430) when the UTM system (140) detects a threshold distance between a position of the UAV (410, 210) and a position of the second client terminal (430).

12. The UAV (410, 210, 310) of one of the preceding claims,
wherein the steering unit (411) comprises a Trojan application configured to perform the detection of the superior client (430) and/or the switching of the tuning of the steering unit (411) from the first radio channel (413) to the second radio channel (414).

13. A method (500) for controlling an unmanned aerial vehicle (UAV) (410, 310) by a radio control device (420, 430), the method (500) comprising:
receiving (501), by a communication unit (412) of the UAV (410, 310), a steering signal via a first radio channel (413) from a first client terminal (420) for steering the UAV (410, 310);
steering (502) the UAV (410, 310), by a steering unit (411) of the UAV (410, 310) tuned to the first radio channel (413), based on the steering signal received via the first radio channel (413);
receiving (503), by the communication unit, a second steering signal via a second radio channel (414) from a second client terminal (430) for steering the UAV (410, 310), wherein the second steering signal comprises information indicating a superior client (430);
detecting (504) the superior client (430) based on the information from the second steering signal, and
switching (505) the tuning of the steering unit (411) from the first radio channel (413) to the second radio channel (414) based on the detection of the superior client (430) in order to switch the steering of the UAV (410, 310) based on the steering signal of the superior client (430),
**characterized in that** the method (500) further comprises:
establishing, by mobile radio modem of the communication unit (412), a communication with a UAV traffic management (UTM) system (140) based on a subscriber identity module (SIM) (311) of the UAV (410, 310), in particular based on an electronic SIM (eSIM) with an ID for a mobile network (130),
transmitting a request to reconfigure the eSIM (311) of the UAV (410, 310) to the UTM (140) in order to switch the steering of the UAV (410, 310), wherein the request to reconfigure the eSIM (311) is transmitted to the UTM (140) based on the steering signal of the superior client (430) via an interface (2a),
reconfiguring the eSIM (311) to new ID of the superior pilot via interfaces (2b, 2c),
steering, by the steering unit (411), the UAV (410, 310) based on the communication with the UTM system (140).

## Patentansprüche

1. Unbemanntes Luftfahrzeug (UAV) (410, 310), das durch eine Funksteuervorrichtung (420, 430) steuerbar ist, wobei das UAV (410, 310) Folgendes umfasst:
eine Kommunikationseinheit (412), die konfiguriert ist,
über einen ersten Funkkanal (413) ein Lenksignal von einem ersten Client-Endgerät (420) zum Lenken des UAV (410, 310) zu empfangen;
eine Lenkeinheit (411), die auf den ersten Funkkanal (413) abgestimmt ist, wobei die Lenkeinheit (411) konfiguriert ist, das UAV (410, 310) auf der Grundlage des Lenksignals, das über den ersten Funkkanal (413) empfangen wurde, zu lenken; und
ein Teilnehmerkennungsmodul (SIM) (311) mit einer Kennung für ein Mobilnetz (130), wobei
die Kommunikationseinheit (412) konfiguriert ist, mittels eines zweiten Funkkanals (414) ein zweites Lenksignal von einem zweiten Client-Endgerät (430) zum Lenken des UAV (410, 310) zu empfangen, wobei das zweite Lenksignal Informationen umfasst, die einen übergeordneten Client (430) angeben; und
die Lenkeinheit (411) konfiguriert ist zum Detektieren des übergeordneten Clients auf der Grundlage der Informationen aus dem zweiten Lenksignal und
Umschalten der Abstimmung der Lenkeinheit (411) vom ersten Funkkanal (413) zum zweiten Funkkanal (414) auf der Grundlage der Detektion des übergeordneten Clients (430), um das Lenken des UAV (410, 310) auf der Grundlage des Lenksignals des übergeordneten Clients (430) umzuschalten,
**dadurch gekennzeichnet, dass**
die Kommunikationseinheit (412) ein Mobilfunkmodem umfasst, das konfiguriert ist, eine Kommunikation mit einem UAV-Verkehrsmanagementsystem (UTM-System) (140) auf der Grundlage des SIM-Moduls (311) aufzubauen, und
das SIM (311) ein elektronisches SIM (eSIM) ist und konfiguriert ist, mittels Schnittstellen (2b, 2c) aufgrund einer Anforderung des übergeordneten Clients mittels des UTM-Systems (140) zu einer neuen Kennung neu konfiguriert zu werden, um die Steuerung des UAV (410, 310) zu übernehmen, und
die Lenkeinheit (411) konfiguriert ist, das UAV (410, 310) auf der Grundlage der Kommunikation mit dem UTM-System (140) zu lenken.

2. UAV (410, 310) nach Anspruch 1, wobei die Kommunikationseinheit (412) einen Drahtlosfunk-Router umfasst, der konfiguriert ist, eine Drahtlosfunkverbindung, insbesondere eine Wi-Fi-Verbindung mit dem ersten Client-Endgerät (420) auf der Grundlage eines Namens, insbesondere einer Dienstsatzkennung (SSID), die einem Drahtlosfunknetz, insbesondere einem Wi-Fi-Netz des ersten Client-Endgeräts (420) zugeordnet ist, aufzubauen, wenn die Lenkeinheit (411) auf den ersten Funkkanal (413) abgestimmt ist.

3. UAV (410, 310) nach Anspruch 2, wobei der Drahtlosfunk-Router einen Wi-Fi-Router umfasst, der konfiguriert ist, eine Wi-Fi-Verbindung mit dem ersten Client-Endgerät (420) auf der Grundlage einer Dienstsatzkennung (SSID), die einem Wi-Fi-Netz des ersten Client-Endgeräts (420) zugeordnet ist, aufzubauen, wenn die Lenkeinheit (411) auf den ersten Funkkanal (413) abgestimmt ist.

4. UAV (410, 310) nach Anspruch 2 oder 3, wobei der Drahtlosfunk-Router konfiguriert ist, den Namen, der dem Drahtlosfunknetz des ersten Client-Endgeräts (420) zugeordnet ist, nach Detektion des übergeordneten Clients (430) zu einem weiteren Namen umzuschalten, um die Drahtlosfunkverbindung mit dem ersten Client-Endgerät (420) zu unterbrechen.

5. UAV (410, 310) nach Anspruch 4, wobei der Drahtlosfunk-Router konfiguriert ist, ein Abschaltsignal vom zweiten Client-Endgerät (430) zu empfangen und den Namen auf der Grundlage des Abschaltsignals umzuschalten.

6. UAV (410, 310) nach einem der Ansprüche 2 bis 5, wobei
der Drahtlosfunk-Router konfiguriert ist, eine Drahtlosfunkverbindung mit dem zweiten Client-Endgerät (430) auf der Grundlage eines Namens, der einem Drahtlosfunknetz des zweiten Client-Endgeräts (430) zugeordnet ist, aufzubauen, wenn die Lenkeinheit (411) auf den zweiten Funkkanal (414) abgestimmt ist.

7. UAV (410, 310) nach einem der vorhergehenden Ansprüche, wobei
die Informationen, die im zweiten Lenksignal enthalten sind, um einen übergeordneten Client (430) anzugeben, Folgendes enthalten: ein Datenfeld, das den übergeordneten Client (430) angibt oder eine höhere Übertragungsleistung des zweiten Lenksignals im Vergleich zum ersten Lenksignal oder eine verschiedene Modulation des zweiten Lenksignals im Vergleich zum ersten Lenksignal.

8. UAV (410, 310) nach Anspruch 1, wobei die Lenkeinheit (411) konfiguriert ist, das UAV (410, 310) auf der Grundlage des Lenksignals des ersten Client-Endgeräts (420), das mittels des UTM-Systems (140) empfangen wurde, zu lenken, wenn die Lenkeinheit (411) auf den ersten Funkkanal (413) abgestimmt ist; und
die Lenkeinheit (411) konfiguriert ist, das UAV (410, 310) auf der Grundlage des Lenksignals des zweiten Client-Endgeräts (430), das mittels des UTM-Systems (140) empfangen wurde, zu lenken, wenn die Lenkeinheit (411) auf den zweiten Funkkanal (414) abgestimmt ist.

9. UAV (410, 310) nach Anspruch 1 oder 8, wobei das Mobilfunkmodem konfiguriert ist, nach Detektion des übergeordneten Clients (430) das eSIM (311, 312) zu einer Kommunikation mit dem zweiten Client-Endgerät (430) neu zu konfigurieren.

10. UAV (410, 310) nach einem der Ansprüche 1 oder 8, wobei
eine Aktivierung der Lenkeinheit (411) zum Detektieren des übergeordneten Clients (430) und/oder Umschalten der Abstimmung der Lenkeinheit (411) vom ersten Funkkanal (413) zum zweiten Funkkanal (414) durch das UTM-System (140) gesteuert wird.

11. UAV (410, 210, 310) nach Anspruch 1, wobei die Lenkeinheit (411) konfiguriert ist, das UAV (410, 210) auf der Grundlage einer Wi-Fi-Verbindung mit dem zweiten Client-Endgerät (430) zu lenken, wenn das UTM-System (140) eine Schwellenwertentfernung zwischen einer Position des UAV (410, 210) und einer Position des zweiten Client-Endgeräts (430) detektiert.

12. UAV (410, 210, 310) nach einem der vorhergehenden Ansprüche, wobei
die Lenkeinheit (411) eine Trojaneranwendung umfasst, die konfiguriert ist, die Detektion des übergeordneten Clients (430) und/oder das Umschalten der Abstimmung der Lenkeinheit (411) vom ersten Funkkanal (413) zum zweiten Funkkanal (414) durchzuführen.

13. Verfahren (500) zum Steuern eines unbemannten Luftfahrzeugs (UAV) (410, 310) durch eine Funksteuervorrichtung (420, 430), wobei das Verfahren (500) Folgendes umfasst:
Empfangen (501) durch eine Kommunikationseinheit (412) des UAV (410, 310) über einen ersten Funkkanal (413) eines Lenksignals von einem ersten Client-Endgerät (420) zum Lenken des UAV (410, 310);
Lenken (502) des UAV (410, 310) durch eine Lenkeinheit (411) des UAV (410, 310), die auf den ersten Funkkanal (413) abgestimmt ist, auf der Grundlage des Lenksignals, das über den ersten Funkkanal (413) empfangen wurde; Empfangen (503) durch die Kommunikationseinheit mittels eines zweiten Funkkanals (414) eines zweiten Lenksignals von einem zweiten Client-Endgerät (430) zum Lenken des UAV (410, 310), wobei das zweite Lenksignal Informationen umfasst, die einen übergeordneten Client (430) angeben; Detektieren (504) des übergeordneten Clients (430) auf der Grundlage der Informationen aus dem zweiten Lenksignal und
Umschalten (505) der Abstimmung der Lenkeinheit (411) vom ersten Funkkanal (413) zum zweiten Funkkanal (414) auf der Grundlage der Detektion des übergeordneten Clients (430), um das Lenken des UAV (410, 310) auf der Grundlage des Lenksignals des übergeordneten Clients (430) umzuschalten, wobei
das Verfahren (500) ferner **gekennzeichnet ist durch**:
Aufbauen **durch** ein Mobilfunkmodem der Kommunikationseinheit (412) einer Kommunikation mit einem UAV-Verkehrsmanagementsystem (UTM-System) (140) auf der Grundlage eines Teilnehmerkennungsmoduls (SIM) (311) des UAV (410, 310), insbesondere auf der Grundlage eines elektronischen SIM (eSIM) mit einer Kennung für ein Mobilnetz (130),
Senden einer Anforderung, das eSIM (311) des UAV (410, 310) neuzukonfigurieren, zum UTM (140), um das Lenken des UAV (410, 310) umzuschalten, wobei die Anforderung, das eSIM (311) umzuschalten, auf der Grundlage des Lenksignals des übergeordneten Clients (430) mittels einer Schnittstelle (2a) zum UTM (140) gesendet wird, Neukonfigurieren des eSIM (311) zu einer neuen Kennung des übergeordneten Piloten mittels Schnittstellen (2b, 2c) und
Lenken **durch** die Lenkeinheit (411) des UAV (410, 310) auf der Grundlage der Kommunikation mit dem UTM-System (140) .

## Revendications

1. Véhicule aérien sans équipage (UAV) (410, 310) susceptible d'être commandé par un dispositif de radiocommande (420, 430), l'UAV (410, 310) comprenant :
une unité de communication (412), configurée pour recevoir un signal de pilotage par le biais d'un premier canal radio (413) depuis un premier terminal client (420) pour piloter l'UAV (410, 310) ;
une unité de pilotage (411) accordée sur le premier canal radio (413), l'unité de pilotage (411) étant configurée pour piloter l'UAV (410, 310) sur la base du signal de pilotage reçu par le biais du premier canal radio (413) ; et
un module d'identité d'abonné (SIM) (311) avec un identifiant pour un réseau mobile (130),
l'unité de communication (412) étant configurée pour recevoir un deuxième signal de pilotage par le biais d'un deuxième canal radio (414) depuis un deuxième terminal client (430) pour piloter l'UAV (410, 310), le deuxième signal de pilotage comprenant des informations indiquant un client supérieur (430) ;
l'unité de pilotage (411) étant configurée pour :
détecter le client supérieur sur la base des informations issues du deuxième signal de pilotage, et
commuter l'accord de l'unité de pilotage (411) depuis le premier canal radio (413) sur le deuxième canal radio (414) sur la base de la détection du client supérieur (430) dans le but de commuter le pilotage de l'UAV (410, 310) sur la base du signal de pilotage du client supérieur (430),
**caractérisé en ce que**
l'unité de communication (412) comprend un modem radio mobile configuré pour établir une communication avec un système de gestion de trafic d'UAV (UTM) (140) sur la base du module SIM (311) et
le SIM (311) est un SIM électronique (eSIM) et est configuré pour être reconfiguré pour un nouvel identifiant par le biais d'interfaces (2b, 2c) lors d'une requête de prise de contrôle de l'UAV (410, 310) par le client supérieur par le biais du système UTM (140) et l'unité de pilotage (411) est configurée pour piloter l'UAV (410, 310) sur la base de la communication avec le système UTM (140).

2. UAV (410, 310) selon la revendication 1,
dans lequel l'unité de communication (412) comprend un routeur radio sans fil, configuré pour établir une liaison radio sans fil, plus particulièrement une liaison Wi-Fi, avec le premier terminal client (420) sur la base d'un nom, plus particulièrement d'un identifiant d'ensemble de services (SSID), associé à un réseau radio sans fil, plus particulièrement un réseau Wi-Fi, du premier terminal client (420) lorsque l'unité de pilotage (411) est accordée sur le premier canal radio (413).

3. UAV (410, 310) selon la revendication 2,
dans lequel le routeur radio sans fil comprend un routeur WiFi, configuré pour établir une liaison WiFi avec le premier terminal client (420) sur la base d'un identifiant d'ensemble de services (SSID) associé à un réseau Wi-Fi du premier terminal client (420) lorsque l'unité de pilotage (411) est accordée sur le premier canal radio (413).

4. UAV (410, 310) selon la revendication 2 ou 3,
dans lequel le routeur radio sans fil est configuré pour commuter le nom associé au réseau radio sans fil du premier terminal client (420) sur un autre nom lors de la détection du client supérieur (430) dans le but de couper la liaison radio sans fil avec le premier terminal client (420).

5. UAV (410, 310) selon la revendication 4,
dans lequel le routeur radio sans fil est configuré pour recevoir un signal de coupure depuis le deuxième terminal client (430) et pour commuter le nom sur la base du signal de coupure.

6. UAV (410, 310) selon l'une des revendications 2 à 5, dans lequel le routeur radio sans fil est configuré pour établir une liaison radio sans fil avec le deuxième terminal client (430) sur la base d'un nom associé à un réseau radio sans fil du deuxième terminal client (430) lorsque l'unité de pilotage (411) est accordée sur le deuxième canal radio (414).

7. UAV (410, 310) selon l'une des revendications précédentes,
dans lequel les informations contenues dans le deuxième signal de pilotage pour indiquer un client supérieur (430) prennent l'une des formes suivantes : un champ de données indiquant le client supérieur (430), une puissance de transmission plus élevée du deuxième signal de pilotage par rapport au premier signal de pilotage, une modulation différente du deuxième signal de pilotage par rapport au premier signal de pilotage.

8. UAV (410, 310) selon la revendication 1,
dans lequel l'unité de pilotage (411) est configurée pour piloter l'UAV (410, 310) sur la base du signal de pilotage du premier terminal client (420) reçu par le biais du système UTM (140) lorsque l'unité de pilotage (411) est accordée sur le premier canal radio (413) ; et
dans lequel l'unité de pilotage (411) est configurée pour piloter l'UAV (410, 310) sur la base du signal de pilotage du deuxième terminal client (430) reçu par le biais du système UTM (140) lorsque l'unité de pilotage (411) est accordée sur le deuxième canal radio (414).

9. UAV (410, 310) selon la revendication 1 ou 8,
dans lequel le modem radio mobile est configuré pour reconfigurer l'eSIM (311, 312) vers une communication avec le deuxième terminal client (430) lors de la détection du client supérieur (430).

10. UAV (410, 310) selon l'une des revendications 1 ou 8,
dans lequel une activation de l'unité de pilotage (411) pour détecter le client supérieur (430) et/ou commuter l'accord de l'unité de pilotage (411) depuis le premier canal radio (413) sur le deuxième canal radio (414) est commandée par le système UTM (140).

11. UAV (410, 210, 310) selon la revendication 1,
dans lequel l'unité de pilotage (411) est configurée pour piloter l'UAV (410, 210) sur la base d'une liaison Wi-Fi avec le deuxième terminal client (430) lorsque le système UTM (140) détecte une distance-seuil entre une position de l'UAV (410, 210) et une position du deuxième terminal client (430).

12. UAV (410, 210, 310) selon l'une des revendications précédentes,
dans lequel l'unité de pilotage (411) comprend une application de type cheval de Troie configurée pour réaliser la détection du client supérieur (430) et/ou la commutation de l'accord de l'unité de pilotage (411) depuis le premier canal radio (413) sur le deuxième canal radio (414).

13. Procédé (500) de commande d'un véhicule aérien sans équipage (UAV) (410, 310) par un dispositif de radiocommande (420, 430), le procédé (500) comprenant :
la réception (501), par une unité de communication (412) de l'UAV (410, 310), d'un signal de pilotage par le biais d'un premier canal radio (413) depuis un premier terminal client (420) pour piloter l'UAV (410, 310) ;
le pilotage (502) de l'UAV (410, 310), par une unité de pilotage (411) de l'UAV (410, 310) accordée sur le premier canal radio (413), sur la base du signal de pilotage reçu par le biais du premier canal radio (413) ;
la réception (503), par l'unité de communication, d'un deuxième signal de pilotage par le biais d'un deuxième canal radio (414) depuis un deuxième terminal client (430) pour piloter l'UAV (410, 310), le deuxième signal de pilotage comprenant des informations indiquant un client supérieur (430) ;
la détection (504) du client supérieur (430) sur la base des informations issues du deuxième signal de pilotage, et
la commutation (505) de l'accord de l'unité de pilotage (411) depuis le premier canal radio (413) sur le deuxième canal radio (414) sur la base de la détection du client supérieur (430) dans le but de commuter le pilotage de l'UAV (410, 310) sur la base du signal de pilotage du client supérieur (430),
le procédé (500) étant **caractérisé en ce qu'**il comprend en outre :
l'établissement, par un modem radio mobile de l'unité de communication (412), d'une communication avec un système de gestion de trafic d'UAV (UTM) (140) sur la base d'un module d'identité d'abonné (SIM) (311) de l'UAV (410, 310), plus particulièrement sur la base d'un SIM électronique (eSIM) avec un identifiant pour un réseau mobile (130),
la transmission d'une requête de reconfiguration de l'eSIM (311) de l'UAV (410, 310) à l'UTM (140) dans le but de commuter le pilotage de l'UAV (410, 310), la requête de reconfiguration de l'eSIM (311) étant transmise à l'UTM (140) sur la base du signal de pilotage du client supérieur (430) par le biais d'une interface (2a),
la reconfiguration de l'eSIM (311) pour un nouvel identifiant du pilote supérieur par le biais d'interfaces (2b, 2c),
le pilotage, par l'unité de pilotage (411), de l'UAV (410, 310) sur la base de la communication avec le système UTM (140) .
